# EUROPEAN PATENT APPLICATION

(11) **EP 4 572 128 A1**
(43) Date of publication of application: **18.06.2025**
(21) Application number: 23852468.0
(22) Date of filing: 02.08.2023
(51) Int. Cl.: H02P 21/24

(54) **DRIVE DEVICE FOR PERMANENT MAGNET SYNCHRONOUS MOTOR, AND CONTROL DEVICE**

(30) Priority: 08.08.2022 JP 2022125982
(71) Applicant: Nakanishi Inc., Kanuma-shi, Tochigi 322-8666 (JP)
(72) Inventor: IWAJI, Yoshitaka, Hitachi-shi, Ibaraki 316-8511 (JP); SATO, Kota, Hitachi-shi, Ibaraki 316-8511 (JP)
(74) Representative: Lewis Silkin LLP
(86) International application number: PCT/JP2023/028355
(87) International publication number: WO 2024/034501

(57) **Abstract**

In the present invention, a device for driving a permanent magnet synchronous motor comprises: an inverter; a detection means that detects electric current that flows in the permanent magnet synchronous motor; and a control means that controls the permanent magnet synchronous motor via the inverter, using an electric current value that is detected by the detection means. The control means performs a calculation for estimating the position of the rotor of the permanent magnet synchronous motor, on the basis of electric current that is generated by applying to the permanent magnet synchronous motor at predetermined phase intervals a second polyphase alternating current of a higher frequency than a first polyphase alternating current for rotatably driving the permanent magnet synchronous motor.

## Description

### TECHNICAL FIELD

The present invention relates to a driving device for a permanent magnet synchronous motor and a control method.

### BACKGROUND ART

A permanent magnet synchronous motor (hereinafter referred to as a PM motor) is widely used in industry, home appliances, medical equipment, electric vehicles, railways, and the like. In principle, since the PM motor needs to control a current phase for rotation driving based on the position angle of a rotor, it is necessary to use a configuration in which a position sensor is provided for the rotor.

On the other hand, position sensorless control that does not directly detect the rotor position has also been practically used. Most position sensorless controls use an induced voltage generated internally when the PM motor is rotated. For example, in the case of an application requiring high torque from the start time, such as a railway vehicle, position sensorless control using a saliency structure of the rotor has been considered and has already been practically used. Due to implementation of the position sensorless control, it is not necessary to use a precise position sensor, thereby making it possible to drive a motor in harsh environments. In addition, since the position sensor is eliminated, it is possible not only to achieve miniaturization of the whole device, but also to avoid the risk of sensor failure.

For example, Patent Literature 1 describes a position sensorless method using magnetic saliency of a rotor of a PM motor. In the method described in Patent Literature 1, a harmonic voltage for estimating the rotor position is continuously applied to an estimated phase axis of the rotor, an error between the estimated position and an actual rotor phase is calculated from a harmonic current generated on an axis perpendicular to the estimated phase axis, and the error is corrected to implement sensorless driving.

In Patent Literature 2, magnetic saliency of a rotor of a PM motor is used, and a pulse voltage generated by an inverter is used as a harmonic voltage for estimating the position of the rotor. In Patent Literature 3, magnetic saliency of a rotor of a PM motor is used, and a current change rate generated by applied harmonics is used to perform position estimation of the rotor.

### CITATION LIST

### PATENT LITERATURE

Patent Literature 1: JPH07-245981A
Patent Literature 2: JPH08-205578A
Patent Literature 3: JP2002-78391A

### SUMMARY OF INVENTION

### TECHNICAL PROBLEM

In the methods described in Patent Literature 1, Patent Literature 2, and Patent Literature 3, magnetic saliency is required in the rotor, and generally, there is a problem in that the methods can be applied only to a rotor having a embedded magnet structure and configured to provide prominent magnetic saliency. For example, many small and inexpensive PM motors have surface magnet structures in which inexpensive magnets are attached to the rotor surface, and in such a case, since there is almost no magnetic saliency, sensorless driving of the methods described in Patent Literature 1, Patent Literature 2, and Patent Literature 3 cannot be applied.

For example, in Patent Literature 1 and Patent Literature 3, harmonics are applied to an estimated phase axis of the rotor, and an axis to which the harmonics are applied is rotated simultaneously with rotation of the estimated axis (that is, rotation of the rotor). In this case, the generated harmonic current is strongly influenced not only by a component due to the saliency of the rotor, but also by a magnetic circuit of a stator. As a result, in a motor using a rotor having little saliency, it becomes difficult to estimate the rotor position due to the influence of a change in the magnetic circuit on a stator side. If position estimation is performed under such circumstances, it becomes necessary to increase the harmonic voltage to be applied, resulting in an increase in harmonic loss.

Furthermore, in Patent Literature 2, harmonics generated by a switching operation of an inverter are used as harmonics for position estimation. The harmonics generated by the inverter change significantly depending on the phase and modulation rate of a voltage output by the inverter, and cannot be uniquely determined. Therefore, as described in Patent Literature 1 and Patent Literature 3, it becomes difficult to perform position estimation of the rotor due to the influence of the magnetic circuit on the stator side depending on the conditions.

### SOLUTION TO THE PROBLEM

For the reasons described above, in the methods described in Patent Literature 1, Patent Literature 2, and Patent Literature 3, it is difficult to estimate the rotor position of the PM motor having a structure with little magnetic saliency or a structure having spatial harmonics in a stator core (for example, a concentrated winding structure), and position sensorless control cannot be performed. In particular, in the PM motor without a saliency structure, the methods cannot be used for position estimation in the low-speed range, and in such cases, it is required to prepare a separate position sensor.

In consideration of the above-described problems, an object of the present invention is to implement position sensorless control in a PM motor, in which the position sensorless control enables position estimation in a low-speed range as well regardless of a structure related to rotor saliency.

In order to solve the above-described problem, the present invention has the following configuration. A driving device for a permanent magnet synchronous motor includes:
an inverter configured to drive the permanent magnet synchronous motor;
a detection unit configured to detect a current flowing toward the permanent magnet synchronous motor; and
a control unit configured to control, using a current value detected by the detection unit, the permanent magnet synchronous motor via the inverter,
wherein the control unit is configured to perform an estimation calculation of a position of a rotor of the permanent magnet synchronous motor based on a current generated by applying a second multiphase alternating current at a given phase interval to the permanent magnet synchronous motor, and
the second multiphase alternating current has a higher frequency than a frequency of a first multiphase alternating current for rotation driving of the permanent magnet synchronous motor.

Another aspect of the present invention has the following configuration. A control method for a permanent magnet synchronous motor including an inverter configured to drive the permanent magnet synchronous motor and a detection unit configured to detect a current flowing through the permanent magnet synchronous motor, includes controlling the permanent magnet synchronous motor via the inverter using a current value detected by the detection unit, and
wherein an estimation calculation of a position of a rotor of the permanent magnet synchronous motor is performed, in the controlling, based on a current which is generated by applying a second multiphase alternating current at a given phase interval to the permanent magnet synchronous motor, and
the second multiphase alternating current has a higher frequency than a frequency of a first multiphase alternating current for rotation driving of the permanent magnet synchronous motor.

### ADVANTAGEOUS EFFECTS OF INVENTION

According to the present invention, in a PM motor, it is possible to perform position sensorless control that enables position estimation in a low-speed range as well regardless of a structure related to rotor saliency.

### BRIEF DESCRIPTION OF DRAWINGS

Figs. 1A to 1C are diagrams illustrating configuration examples of a PM motor and saliency thereof;
Figs. 2A to 2C are diagrams illustrating a method of detecting a position of a rotor using a harmonic superposition method;
Fig. 3 is a diagram illustrating an example of a circuit configuration according to an embodiment of the present invention;
Fig. 4 is a diagram illustrating an example of a circuit configuration of a position estimation unit according to the embodiment of the present invention;
Fig. 5 is a diagram illustrating an example of a circuit configuration using a method of the related art;
Figs. 6A to 6C are graphs illustrating phases according to the embodiment of the present invention;
Fig. 7 is a diagram illustrating an example of a detection result according to the embodiment of the present invention;
Fig. 8A to 8F are diagrams illustrating examples of position estimation according to the embodiment of the present invention;
Figs. 9A to 9F are diagrams illustrating examples of position estimation according to the embodiment of the present invention;
Figs. 10A and 10B are diagrams illustrating a current carrying method in the PM motor;
Figs. 11A and 11B are diagrams illustrating a change in inductance in the PM motor;
Fig. 12 is a diagram illustrating an example of a waveform pattern according to the embodiment of the present invention;
Fig. 13 is a diagram illustrating an example of the waveform pattern according to the embodiment of the present invention; and
Fig. 14 is a diagram illustrating an example of the waveform pattern according to the embodiment of the present invention.

### DESCRIPTION OF EMBODIMENTS

Hereinafter, an embodiment of the present invention will be described with reference to the accompanying drawings. It is noted that the embodiment described below is an embodiment for describing the present invention and is not intended to be interpreted as a limitation of the invention. Furthermore, all of the configurations described in each embodiment are not essential configurations for solving the problems of the present invention. In addition, in each drawing, the same components will be denoted by the same reference numerals so as to illustrate a corresponding relationship between the components.

### <First Embodiment>

### [PM Motor Overview]

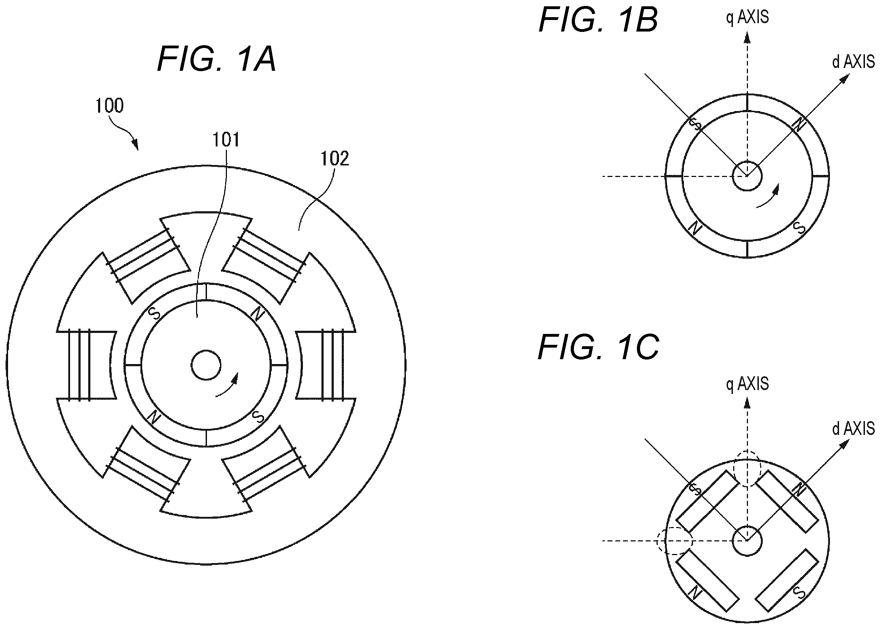

First, a configuration of a PM motor 100 to which the present invention can be applied will be described. FIG. 1A illustrates the configuration of the PM motor 100 according to the present embodiment. The PM motor 100 includes a rotor 101 and a stator 102. The stator 102 has a concentrated winding configuration in which a coil formed of copper wire or the like is wound around a stator core including a salient pole. Here, an example in which the stator 102 includes six stator cores is illustrated, but the number of stator cores is not limited thereto. The coil is not limited to the concentrated winding configuration, and may be a distributed winding configuration. The rotor 101 includes a permanent magnet. Examples of the rotor 101 include a surface magnet rotor in which a permanent magnet is attached to the surface around a rotor core, as illustrated in Fig. 1B, and an embedded magnet rotor in which a permanent magnet is embedded in a rotor core, as illustrated in Fig. 1C. The example in Figs. 1A to 1C illustrates an example of a four-pole rotor.

A description will be given as to saliency of the surface magnet rotor illustrated in Fig. 1B and saliency of the embedded magnet rotor illustrated in Fig. 1C. In the surface magnet rotor, since permanent magnets are respectively located on both the d axis, which is a direction of magnetic flux created by a magnetic pole (main magnetic flux direction), and the q axis, which is magnetically perpendicular to the d axis, inductance Ld in the d-axis direction and inductance Lq in the q-axis direction coincide with each other (Ld = Lq), thereby having non-saliency. On the other hand, in the embedded magnet rotor, a permanent magnet is only present on the d axis, so the inductance in the q-axis direction is large (Ld < Lq), thereby having saliency. In other words, a rotor structure causes a difference in inductance between the d axis and the q axis.

Due to the difference in saliency of the rotor as described above, the position sensorless control using the harmonic superposition method of the related art utilizing the saliency described in Patent Literature 1, PATENT LITERATURE 2, and Patent Literature 3 cannot be applied to a PM motor using a surface magnet rotor, that is, a SPM motor. In addition, when a stator coil is a concentrated winding type, the influence of spatial harmonics is large, thereby making it difficult to apply the sensorless control using the harmonic superposition method of the related art.

The applicant here confirmed that, even with the above-mentioned surface magnet rotor configuration, weak saliency appears depending on the angle of the permanent magnet. However, a change in the magnetic circuit due to a slot structure of the stator as illustrated in Fig. 1A is relatively large, and weak saliency of the rotor cannot be detected. As a result, it is difficult to apply the position sensorless control using the harmonic superposition method of the related art to the configuration of the surface magnet rotor.

Therefore, in addition to the configuration of the embedded magnet rotor having saliency, as illustrated in Fig. 1C, the method according to the present embodiment illustrates a configuration that can be applied to the configuration of the surface magnet rotor having weak saliency (weak salient pole), as illustrated in Fig. 1B. It is noted that, in the configuration described in the present specification, non-saliency (weak salient pole) in the surface magnet rotor is described as being extremely small compared to the saliency of the configuration of the embedded magnet rotor. Details will be described later.

### [Position Estimation Method]

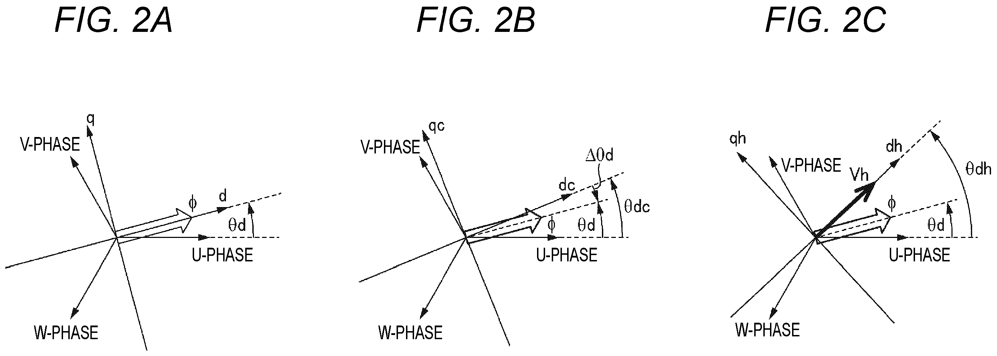

Figs. 2A to 2C are diagrams illustrating a difference between a rotor position estimation method of the related art described in Patent Literature 1 and a rotor position estimation method according to the present embodiment.

Fig. 2A illustrates axes of a U-phase, a V-phase, and a W-phase of a three-phase AC motor serving as a PM motor. The d axis indicates a direction of magnet magnetic flux Φ. θd indicates a difference between the axis of the U-phase and the d axis based on the position of the fixed winding of the U-phase. θd corresponds to the position (angle) of the rotor. It is noted that, when the motor has a sensor, θd can be detected directly, whereas in the case of sensorless control, θd cannot be detected directly.

Fig. 2B is a diagram illustrating an outline of rotor position estimation and control in a method of the related art. For example, in Patent Literature 2, based on the saliency, an arbitrary harmonic voltage change is superposed on the dc-qc axis, which is an axis for control, and an error Δθd between an actual rotor phase θd and an estimated phase θdc is calculated from a resulting current. Then, by correcting an angular velocity ω1 such that Δθd becomes 0, the dq axis and the dc-qc axis are controlled to coincide with each other, thereby achieving sensorless control. At this time, in the method of the related art, the harmonic superposition phase of is rotated.

Fig. 2C illustrates an outline of the rotor position estimation in the present embodiment. In the method of the present embodiment, a harmonic voltage of a phase θdh is applied to the dh axis based on a given pattern regardless of the rotor position, and the rotor position is estimated based on the detection result. In the present embodiment, unlike the method of the related art, the rotor position can be estimated by a method in which the axis of the harmonic superposition phase is fixed and is not rotated. Details of the pattern and the like will be described later.

### [Circuit Configuration]

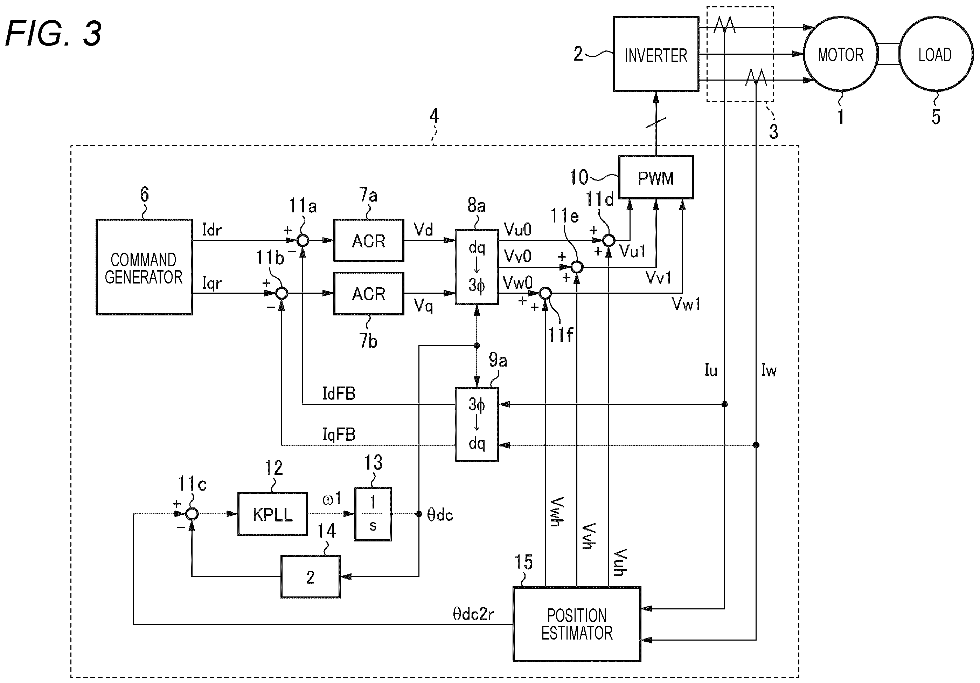

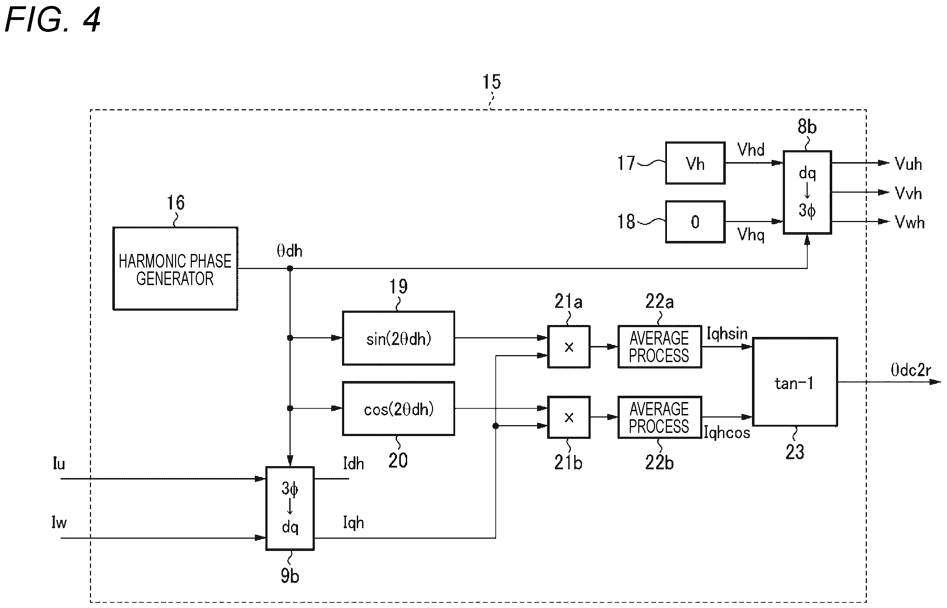

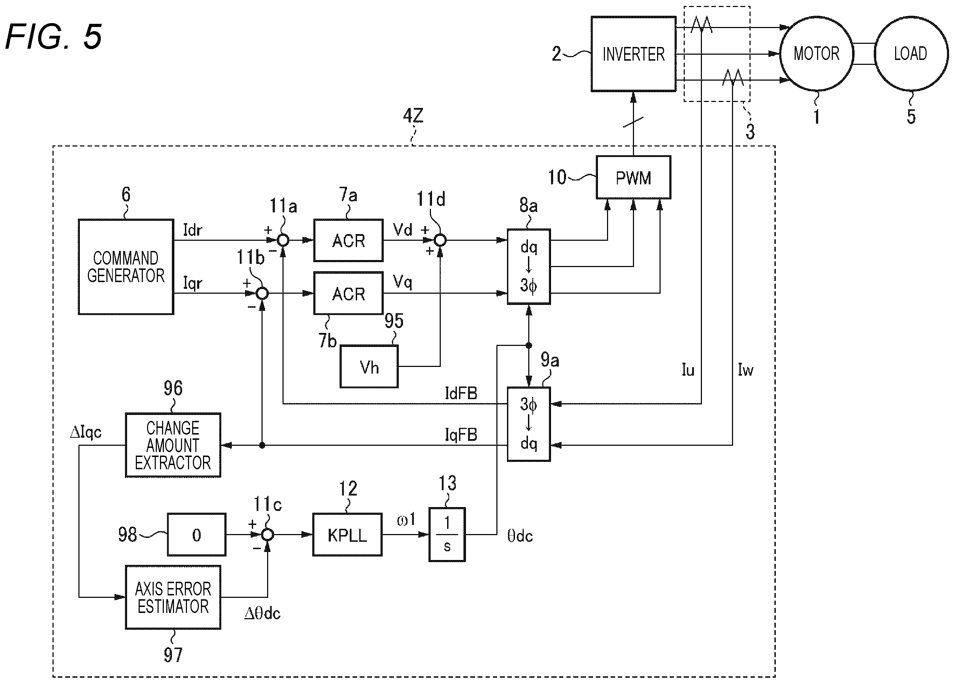

An example of a circuit configuration of the present embodiment will be described with reference to Figs. 3 and 4. An example of a circuit configuration in the method of the related art is illustrated in Fig. 5 for comparison. Fig. 3 is a diagram illustrating a configuration example of a system including a control device for the PM motor according to the present embodiment. The system includes a permanent magnet synchronous motor (PM motor 1), an inverter 2, a current detector 3, a control device 4, and a mechanical load 5. The PM motor 1 according to the present embodiment can be used with a rotor having any one of the configurations illustrated in Figs. 1B and 1C, but here, a description will be given as a three-phase PM motor provided with a rotor having non-saliency, as illustrated in Fig. 1B.

The inverter 2 performs a switching operation based on a pulse width modulation (PWM) control signal from the control device 4, converts current from an AC power source (not illustrated) into a three-phase voltage, and applies the three-phase voltage to the PM motor 1.

The mechanical load 5 is a load device driven by the PM motor 1. The present embodiment corresponds to operating portions of industrial equipment, home appliances, medical equipment, railways, electric vehicles, and the like, and a PM motor control method according to the present invention is applicable.

The current detector 3 detects the three-phase current flowing by the voltage applied from the inverter 2 to the PM motor 1, and feeds the detected result back to the control device 4. Here, an example in which a current value Iu corresponding to the U-phase and a current value Iw corresponding to the W-phase are detected from among the three-phase currents is illustrated.

The control device 4 performs sensorless vector control to drive the PM motor 1 without using a position sensor (rotation angle sensor). The control device 4 includes a command generator 6, current controllers (ACR) 7a and 7b, an inverse coordinate converter 8a, a coordinate converter 9a, a PWM controller 10, an adder/subtractor 11, a KPLL controller 12, an integrator 13, a double gain 14, and a position estimator 15.

The command generator 6 generates an excitation current command Idr and a torque current command Iqr corresponding to the motor current. The excitation current command Idr is input to the current controller 7a via an adder/subtractor 11a. At this time, the adder/subtractor 11a subtracts a feedback current value IdFB output from the coordinate converter 9a from the excitation current command Idr and outputs the result to the current controller 7a. The torque current command Iqr is input to the current controller 7b via an adder/subtractor 11b. At this time, the adder/subtractor 11b subtracts a feedback current value IqFB output from the coordinate converter 9a from the torque current command Iqr and outputs the result to the current controller 7b. The current controller 7a controls a voltage command Vd for the d axis based on the input excitation current command Ibr. The current controller 7b controls a voltage command Vq for the q axis based on the input torque current command Iqr.

The voltage command Vd from the current controller 7a and the voltage command Vq from the current controller 7b are input to the inverse coordinate converter 8a. The inverse coordinate converter 8a converts the input voltage commands Vd and Vq from two phases to three-phase voltage commands Vu0, Vv0, and Vw0 corresponding to the PM motor 1 based on an θdc input from the integrator 13 and outputs the converted commands. In other words, the inverse coordinate converter 8a performs coordinate conversion from a two-phase coordinate system to a three-phase coordinate system.

An adder/subtractor 11d adds the voltage command Vu0 corresponding to the U-phase to a voltage command Vuh of the U-phase output from the position estimator 15, and outputs the result as a voltage command Vu1 to the PWM controller 10. An adder/subtractor 11e adds the voltage command Vv0 corresponding to the V-phase to a voltage command Vvh of the V-phase output from the position estimator 15, and outputs the result as a voltage command Vv1 to the PWM controller 10. An adder/subtractor 11f adds the voltage command Vw0 corresponding to the W-phase to a voltage command Vwh of the W-phase output from the position estimator 15, and outputs the result as a voltage command Vw1 to the PWM controller 10. In other words, the voltage commands Vuh, Vvh, and Vwh output from the position estimator 15 are superposed on Vu0, Vv0, and Vw0 for controlling the rotation of the PM motor 1. The voltage commands Vuh, Vvh, and Vwh output from the position estimator 15 will be described in detail later.

The coordinate converter 9a converts the U-phase current value Iu and the W-phase current value Iw detected by the current detector 3 from three-phase to two-phase feedback current values IdFB and IqFB based on the θdc input from the integrator 13. In other words, the coordinate converter 9a performs coordinate conversion from a three-phase coordinate system to a two-phase coordinate system. The converted feedback current values IdFB and IqFB are output to the adders/subtractors 11a and 11b, respectively.

The PWM controller 10 outputs a PWM control signal to the inverter 2 based on the input voltage commands Vu1, Vv1, and Vw1.

The position estimator 15 outputs the three-phase voltage commands Vuh, Vvh, and Vwh corresponding to a pattern signal specified in advance to estimate the position of the rotor of the PM motor 1, and estimates the position of the rotor of the PM motor 1 from the U-phase current value Iu and the W-phase current value Iw detected by the current detector 3 in response to the voltage commands. A specific method of position estimation according to the present embodiment will be described later. The position estimator 15 outputs the three-phase voltage commands Vuh, Vvh, and Vwh to the adders/subtractors 11d, 11e, and 11f, respectively. The position estimator 15 outputs a phase θdc2r to an adder/subtractor 11c as the estimated result of the rotor position of the PM motor 1.

The adder/subtractor 11c subtracts the phase from the double gain 14 from the phase θdc2r from the position estimator 15 and outputs the result to the KPLL controller 12. The KPLL controller 12 calculates an angular frequency ω1 for adjusting the rotor position based on the rotation angle from the adder/subtractor 11c and outputs the result to the integrator 13. The integrator 13 derives the phase θdc using the angular frequency ω1 from the KPLL controller 12. The phase θdc is output to the inverse coordinate converter 8a, the coordinate converter 9a, and the double gain 14. The double gain 14 is an amplifier that doubles the phase θdc and outputs the amplified value to the adder/subtractor 11c.

### Position Estimator

Fig. 4 is a diagram illustrating an example of the circuit configuration of the position estimator 15 according to the present embodiment. As illustrated in Fig. 3, the position estimator 15 receives the current values Iu and Iw of the PM motor 1 detected by the current detector 3, and outputs the voltage commands Vuh, Vvh, and Vwh respectively corresponding to the three-phase harmonic voltages, and the phase θdc2r.

In the position estimator 15, the harmonic phase generator 16 generates a harmonic phase θdh and outputs the generated harmonic phase θdh to an inverse coordinate converter 8b, a coordinate converter 9b, a sine signal generator 19, and a cosine signal generator 20, respectively. A harmonic voltage setter 17 sets a voltage value Vh indicating the magnitude of the harmonic voltage to be applied. The voltage value set here is used as Vhd, which is a voltage command for the dh axis. A zero setter 18 sets a voltage value of zero. The voltage value set here is used as Vhq, which is a voltage command for the qh axis.

The inverse coordinate converter 8b converts the voltage command Vhd from the harmonic voltage setter 17 and the voltage command Vhq from the zero setter 18 into the three-phase harmonic voltage commands Vuh, Vvh, and Vwh based on the harmonic phase θdh from the harmonic phase generator 16, and outputs the three-phase harmonic voltage commands. That is, the inverse coordinate converter 8b performs coordinate conversion from a two-phase coordinate system to a three-phase coordinate system.

The coordinate converter 9b converts the U-phase current value Iu and the W-phase current value Iw detected by the current detector 3 into two-phase current values on the dh-qh axis based on the harmonic phase θdh from the harmonic phase generator 16. That is, the coordinate converter 9b performs coordinate conversion from a three-phase coordinate system to a two-phase coordinate system. Among these, a harmonic current value Iqh on the qh axis is input to each of integrators 21a and 21b.

The sine signal generator 19 obtains sin (2×θdh) based on the harmonic phase θdh from the harmonic phase generator 16 and outputs the result to the integrator 21a. The cosine signal generator 20 calculates cos (2×θdh) based on the harmonic phase θdh from the harmonic phase generator 16 and outputs the result to the integrator 21b.

The integrator 21a integrates the sine signal generator 19 and the harmonic current value Iqh from the coordinate converter 9b, and outputs the integrated result to an average value calculator 22a. The average value calculator 22a calculates an average value of the output values from the integrator 21a and outputs the calculated average value to an arctangent calculator 23 as a current value Iqhsin. The integrator 21b integrates the cosine signal generator 20 and the harmonic current value Iqh from the coordinate converter 9b, and outputs the integrated value to an average value calculator 22b. The average value calculator 22b calculates an average value of the output values from the integrator 21b, and outputs the average value as a current value Iqhcos to the arctangent calculator 23.

The arctangent calculator 23 calculates an arctangent (tan⁻¹) using the current values Iqhsin and Iqhcos respectively input from the average value calculators 22a and 22b, and outputs the calculated arctangent as θdc2r.

### Configuration Example of Related Art

Fig. 5 is a diagram illustrating an example of a circuit configuration as a comparative example. The same reference numbers are attached to configurations overlapping the configurations of the present embodiment illustrated in Fig. 3, and descriptions thereof will be omitted. In a control device 4Z, instead of the double gain 14 and position estimator 15 of the control device 4 of the present embodiment illustrated in Fig. 3, a voltage setter 95, a change amount extractor 96, an axis error estimator 97, and a zero setter 98 are provided.

A voltage command from a current controller 7a and a voltage command Vh from the voltage setter 95 are added by an adder/subtractor 11d, and are input to an inverse coordinate converter 8a as a voltage command for the d axis. The voltage command Vh from the voltage setter 95 corresponds to harmonics to be superposed in the method of the related art.

A feedback current value IqFB from a coordinate converter 9a is input to the change amount extractor 96. The change amount extractor 96 calculates ΔIqc, which is an error current on the qc axis, based on the feedback current value IqFB, and outputs the calculated result to the axis error estimator 97. The axis error estimator 97 uses ΔIqc to calculate Δθdc illustrated in Fig. 2B. Then, an adder/subtractor 11c subtracts the value of Δθdc from the value from the zero setter 98 so as to calculate a negative difference value, and outputs the calculated value to the KPLL controller 12. In the method of the related art, the dq axis and the dc-qc axis are aligned with each other by correcting an angular velocity ω1 so that this difference value becomes 0.

### [Phase]

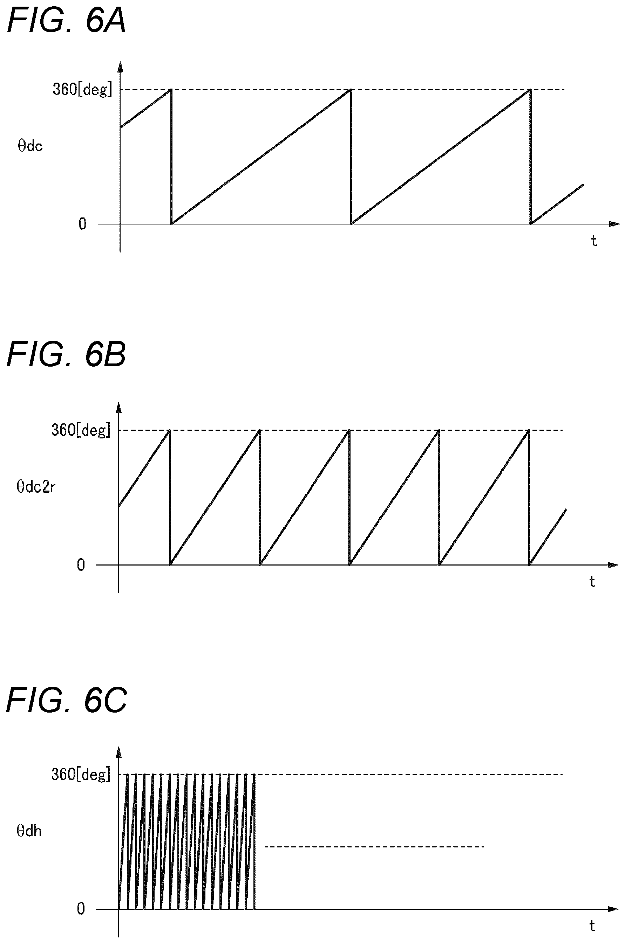

Figs. 6A to 6C illustrate a relationship between the phases θdc, θdc2r, and θdh in the control device 4 of the PM motor 1 according to the present embodiment. In Figs. 6A to 6C, the horizontal axis indicates time t, and the vertical axis indicates phase [deg]. As illustrated in Figs. 6A and 6B, the phase θdc2r has a frequency twice that of the phase θdc. In addition, θdh has a much higher frequency (harmonics) than θdc and θdc2r.

In the present embodiment, a multiphase alternating current (in the present example, three-phase alternating current) output from the inverter 2 as a control signal corresponding to the phase θdc is also referred to as a "first multiphase alternating current". On the other hand, a multiphase alternating current (in the present example, three-phase alternating current) for position estimation corresponding to the phase θdh is also referred to as a "second multiphase alternating current". It is noted that, when position estimation of the rotor is performed in a state in which the rotor of the PM motor is stopped, only the second multiphase alternating current is output from the inverter 2. However, when the position estimation of the rotor is performed in a state in which the rotor is rotating (for example, at low-speed rotation and the like), the result is output in a state in which the second multiphase alternating current is superposed on the first multiphase alternating current.

According to a frequency relationship between Figs. 6A and 6C, the output frequency of the voltage commands Vuh, Vvh, and Vwh from the position estimator 15 is greater than the output frequency of the voltage commands Vu0, Vv0, and Vw0 from the inverse coordinate converter 8 illustrated in Fig. 3. In other words, a process for position estimation is executed in a shorter cycle than that of a process related to rotation driving.

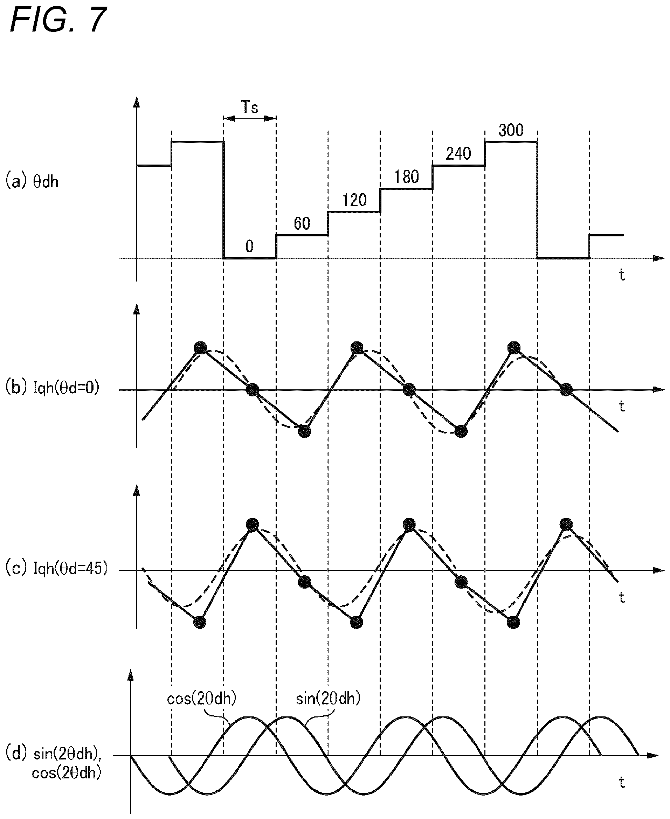

Figs. 7(a) to 7(d) illustrates an example of a detection waveform in the position estimator 15. InFigs. 7(a) to 7(d), the horizontal axis indicates time t, which corresponds with each other inFigs. 7(a) to 7(d). Furthermore, Ts indicates a control cycle for position estimation, and is specified in advance. In the case of Ts, for example, a calculation processing cycle degree of the control device 4 is set. Therefore, when the processing speed of the control device 4 is high, Ts can be set shorter.

In Fig. 7(a), the vertical axis indicates the phase θdh of the harmonic voltage, and here, a step width is set in 60° increments. Thus, θdh is repeated between the values of 0°, 60°, 120°, 180°, 240°, and 300°. These harmonic voltages are superposed on the control voltage applied to the PM motor 1. The voltage command Vh is set only for the dh axis by the harmonic voltage setter 17 and the zero setter 18 illustrated in Fig. 4. Then, the set voltage is converted into harmonic voltage commands Vuh, Vvh, and Vwh based on θdh from the harmonic phase generator 16. As illustrated in Fig. 3, the harmonic voltage commands Vuh, Vvh, and Vwh are added to (superposed on) the three-phase voltage commands Vu0, Vv0, and Vw0, respectively, and input to the PWM controller 10 as Vu1, Vv1, and Vw1.

Fig. 7(b) illustrates a waveform indicating the harmonic current value Iqh obtained by the coordinate converter 9b of the position estimator 15 based on the current values Iu and Iw obtained by the current detector 3 when the rotor position of the PM motor 1 is θd = 0°. In Fig. 7(b), values plotted with black circles (•) correspond to calculation results of the Fourier integration in each section of Ts.

Fig. 7(c) illustrates a waveform indicating the value of the harmonic current value Iqh obtained by the coordinate converter 9b of the position estimator 15 based on the current values lu and Iw obtained by the current detector 3 when the rotor position of the PM motor 1 is θd = 45°. As illustrated in Figs. 7(b) and 7(c), the phase of the waveform varies depending on the rotor position. Further, as illustrated in Figs. 7(b) and 7(c), the harmonic current value Iqh is generated with a cycle twice that of θdh. In this manner, by observing the harmonic current value Iqh and determining its phase, it is possible to estimate the rotor phase θd, that is, the rotor position.

Fig. 7(d) illustrates signal waveforms respectively output by the sine signal generator 19 and the cosine signal generator 20 based on the harmonic phase θdh illustrated in Fig. 7(a).

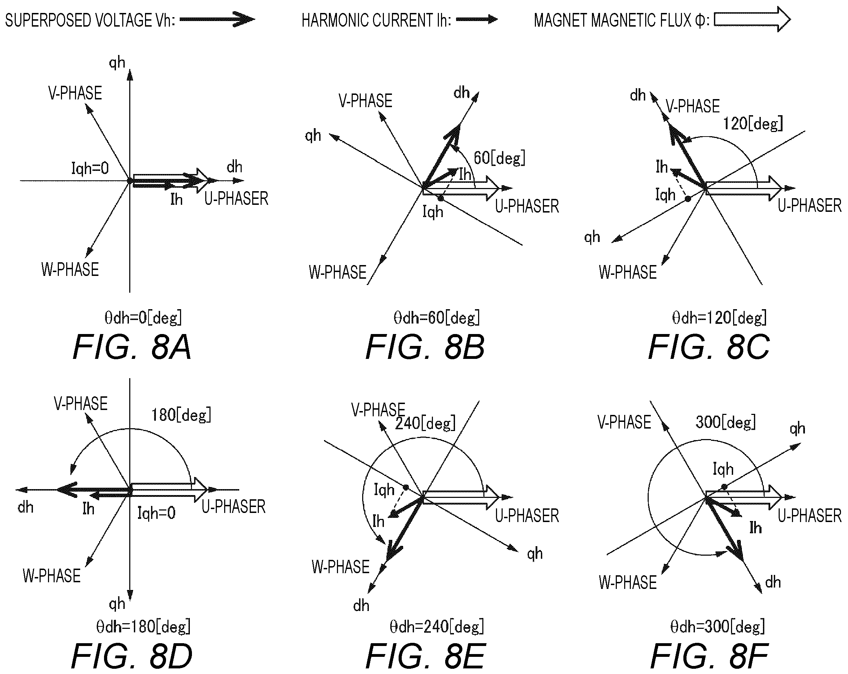

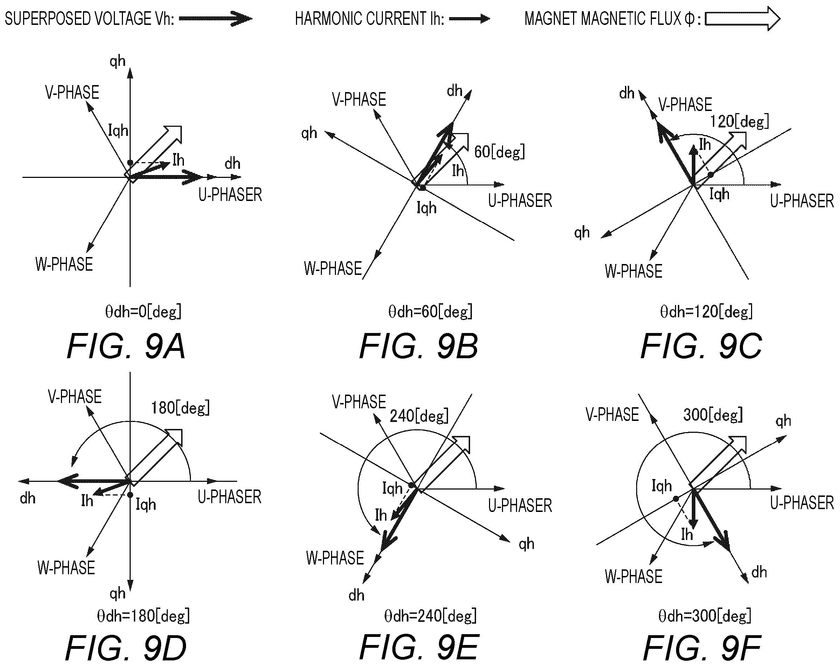

The principle of generating the waveforms in Figs. 7(b) and 7(c) will be described in more detail using Figs. 8A to 8F and 9A to 9F. First, the waveform when the rotor position is θd = 0° (Fig. 7(b)) will be described with reference to Figs. 8A to 8F. As illustrated in Fig. 7(a), a relationship between the superposed voltage Vh, the harmonic current Ih, and the magnet magnetic flux Φ in the rotor is illustrated for each of the six positions of θd = 0, 60, 120, 180, 240, and 300 [deg]. The direction of the magnet magnetic flux Φ corresponds to the direction of the d axis, and the direction perpendicular thereto corresponds to the direction of the q axis. The superposed voltage Vh indicates the voltage applied to the PM motor based on the harmonic voltage commands Vuh, Vvh, and Vwh described above.

Here, the rotor of the PM motor 1 is assumed to rotate at a low speed, and θd is assumed to be stationary compared to a change in θdh. That is, the following description is based on the assumption that θdh is switched in sequence in a state in which the rotor is stopped at a certain rotation angle (position). This is based on the relationship illustrated in Figs. 6A and 6C.

Fig. 8A illustrates a state in the case of θdh = 0°. In this case, since the harmonic superposed voltage Vh is applied in the positive direction on the d axis, the harmonic current Ih is observed only on the dh axis and is not generated on the qh axis. In other words, the harmonic current value Iqh on the qh axis is 0.

Fig. 8B illustrates a state in the case of θdh = 60°. In this case, the harmonic current Ih is inclined in the negative direction of the dh axis with respect to the dh axis. As a result, the harmonic current value Iqh on the qh axis is observed as a negative value. The value here corresponds to a position at which a negative value is plotted in Fig. 7(b) (θdh = 60°). The inclination of the harmonic current Ih at this time is a phenomenon that can occur in the PM motor of the configuration of any one of the surface magnet rotor or the embedded magnet rotor each having different saliency, as illustrated in Figs. 1B and 1C. In the present invention, this phenomenon is applied to perform position estimation of the rotor.

Fig. 8C illustrates a state in the case of θdh = 120°. In this case, the harmonic current Ih is inclined in the positive direction of the qh axis with respect to the dh axis. Therefore, the harmonic current value Iqh on the qh axis is observed as a positive value. The value here corresponds to a position at which a positive value is plotted in Fig. 7(b) (θdh = 120°).

Fig. 8D illustrates a state in the case of θdh = 180°. In this case, since the harmonic superposed voltage Vh is applied in the negative direction on the d axis, the harmonic current Ih is observed only on the dh axis and is not generated on the qh axis. That is, as illustrated in Fig. 8A, the harmonic current value Iqh on the qh axis is 0. The value here corresponds to a position at which 0 is plotted in Fig. 7(b) (θdh = 180°).

Fig. 8E illustrates a state in the case of θdh = 240°. In this case, the harmonic current Ih is inclined in the negative direction of the qh axis with respect to the dh axis. Therefore, Iqh on the qh axis is observed as a negative value. The value here corresponds to a position at which a negative value is plotted in Fig. 7(b) (θdh = 240°). In this case as well, a value equivalent to that of the case of θdh = 60° is observed.

Fig. 8F illustrates a state in the case of θdh = 300°. In this case, the harmonic current Ih is inclined in the positive direction of the qh axis with respect to the dh axis. Therefore, Iqh on the qh axis is observed as a positive value. The value here corresponds to a position at which a positive value is plotted in Fig. 7(b) (θdh = 300°). In this case as well, a value equivalent to that of the case of θdh = 120° is observed. In this manner, Iqh can be observed as a cyclical value by a relationship between the value of θdh and the rotor position, and the rotor position can be estimated based on the observation result.

Similarly, Figs. 9A to 9F illustrate the principle of detecting the waveform when the rotor position is θd = 45° (Fig. 7(c)). In consideration of θd = 45°, the direction of the magnet magnetic flux Φ (that is, the direction of the d axis) is different from those in Figs. 8A to 8F.

Fig. 9A illustrates a state in the case of θdh = 0°. In this case, the harmonic current Ih is inclined in the positive direction of the qh axis with respect to the dh axis. Therefore, Iqh on the qh axis is observed as a positive value. The value here corresponds to a position at which a positive value is plotted in Fig. 7(c) (θdh = 0°).

Fig. 9B illustrates a state in the case of θdh = 60°. In this case, the harmonic current Ih is inclined in the negative direction of the qh axis with respect to the dh axis. As a result, the harmonic current value Iqh on the qh axis is observed as a negative value. The value here corresponds to a position at which a negative value is plotted in Fig. 7(c) (θdh = 60°).

Fig. 9C illustrates a state in the case of θdh = 120°. In this case, the harmonic current Ih is inclined in the negative direction of the qh axis with respect to the dh axis. As a result, the harmonic current value Iqh on the qh axis is observed as a negative value. The inclination in the negative direction here is greater than that of the case of θdh = 60°, and as a result, an observed value is also smaller than that of the case of θdh = 60°. The value here corresponds to a position at which a negative value is plotted in Fig. 7(c) (θdh = 120°).

Fig. 9D illustrates a state in the case of θdh = 180°. In this case, the harmonic current Ih is inclined in the positive direction of the qh axis with respect to the dh axis. Therefore, the harmonic current value Iqh on the qh axis is observed as a positive value. The value here corresponds to a position at which a positive value is plotted in Fig. 7(c) (θdh = 180°). In this case as well, a value equivalent to that of the case of θdh = 0° is observed.

Fig. 9E illustrates a state in the case of θdh = 240°. In this case, the harmonic current Ih is inclined in the negative direction of the qh axis with respect to the dh axis. As a result, the harmonic current value Iqh on the qh axis is observed as a negative value. The value here corresponds to a position at which a negative value is plotted in Fig. 7(c) (θdh = 240°). In this case as well, a value equivalent to that of the case of θdh = 60° is observed.

Fig. 9F illustrates a state in the case of θdh = 300°. In this case, the harmonic current Ih is inclined in the negative direction of the qh axis with respect to the dh axis. As a result, the harmonic current value Iqh on the qh axis is observed as a negative value. The inclination in the negative direction here is greater than that of the case of θdh = 240°, and as a result, an observed value is also smaller than that of the case of θdh = 240°. The value here corresponds to a position at which a negative value is plotted in Fig. 7(c) (θdh = 300°). In this case as well, a value equivalent to that of the case of θdh = 120° is observed.

It is noted that, when θdh is observed for one cycle (360°) in increments of 60°, the harmonic current value Iqh can be observed for two cycles. In this case, it is not necessary to observe two cycles, and position estimation of the rotor may be performed when one cycle of the harmonic current value Iqh can be observed. In addition, in order to improve estimation accuracy, after the observation cycle of the harmonic current value Iqh is made longer (for example, three cycles or more), position estimation of the rotor may be performed.

The observation result of the harmonic current value Iqh according to θdh is used as phase information to calculate the actual rotor phase θd of the PM motor 1. In the present embodiment, Fourier integration is used to estimate the rotor phase θd based on the harmonic current value Iqh. Fourier integration is implemented by the sine signal generator 19, the cosine signal generator 20, the integrators 21a and 21b, and the average value calculators 22a and 22b in the configuration of the position estimator 15 illustrated in Fig. 4. A series of processes by these corresponds to Fourier integration, and as a result, the magnitudes of the sine and cosine components included in the harmonic current value Iqh can be obtained. Then, the phase θdc2r can be obtained from these sine and cosine components by the arctangent calculator 23, and this value corresponds to the actual rotor phase.

The phase θdc2r, which is the estimated position of the rotor estimated by the position estimator 15, is estimated using the harmonic current, so it is assumed that the phase includes a noise component. Therefore, in the present embodiment, in order to suppress the influence of noise, phase locked loop (PLL) control by the KPLL controller 12 is used to give a certain band to the response, thereby removing the noise components. Here, since the output of the KPLL controller 12 becomes the angular frequency ω1 for driving of the PM motor 1, it is possible to estimate the rotor position of the PM motor 1 as well as the rotation speed of the rotor.

Furthermore, the phase θdc2r obtained by applying harmonics changes at a frequency twice that of θd, as described above with reference to Fig. 8. The saliency of the rotor acts equally on both the N pole and the S pole of the permanent magnet provided in the rotor, so that the frequency change is always twice as large. Accordingly, in the present embodiment, as illustrated in Fig. 3, the double gain 14 is provided, the estimated phase θdc is doubled in advance, and deviation between the doubled phase θdc and θdc2r is obtained by the adder/subtractor 11c. Then, the PLL control is performed on the deviation by the KPLL controller 12.

### [Effects]

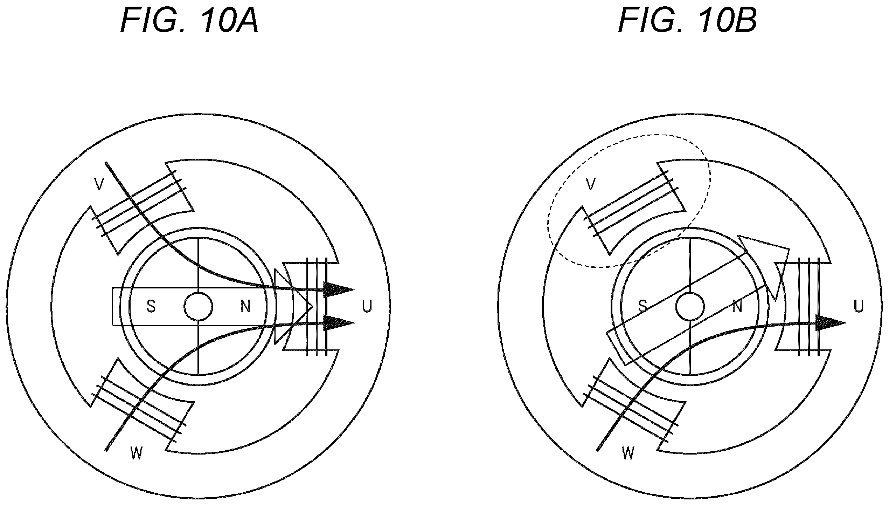

The effects of the position sensorless driving according to the method of the present embodiment will be described below. Figs. 10A and 10B illustrate configuration examples of the PM motor to which the method according to the present embodiment can be applied. Here, the PM motor having two poles and three phases is illustrated. The PM motor has a structure in which three-phase windings of a U-phase, a V-phase, and a W-phase are wound around a stator slot. The PM motor illustrated here has no saliency like the surface magnet rotor, as described with reference to Figs. 1A to 1C (that is, saliency is so weak that a change cannot be detected by the method of the related art).

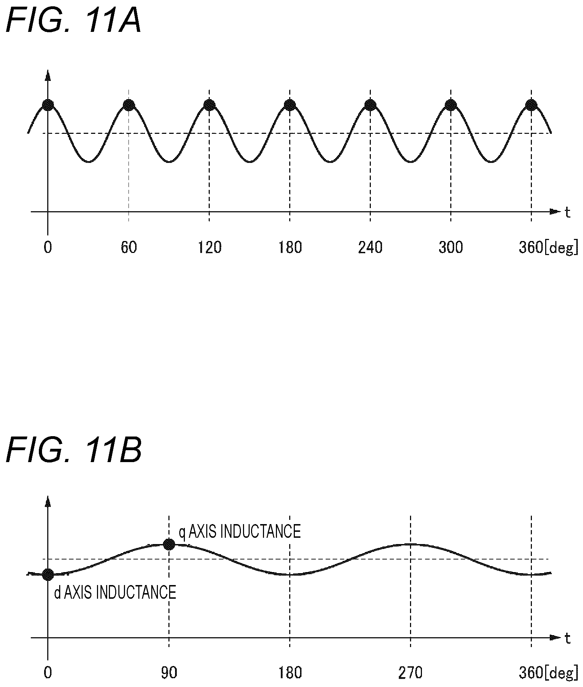

In Figs. 10A and 10B, a white arrow indicates a direction of the magnetic flux when current is applied to each phase, and a black arrow indicates a direction of a magnetic field line when current is applied to each phase. Figs. 11A and 11B are graphs illustrating a change in inductance of the stator and rotor constituting the PM motor. In Figs. 11A and 11B, the horizontal axis indicates the rotation angle (actual phase) of the rotor that rotates over time, and the vertical axis indicates inductance.

When harmonics are applied to the windings, for example, when current flows from the V- and W-phases to the U-phase (Fig. 10A), the magnetic circuit of the magnetic flux caused by the current is different from that of a case in which current flows from the W-phase to the U-phase and current does not flow from the V-phase to the U-phase (Fig. 10B). In the case of the pattern in Fig. 10B, the V-phase is a vacant coil. The magnetic circuit of the magnetic flux in the PM motor changes depending on the current flow state of each phase. As a result, the inductance of the stator appears to fluctuate in the circuit of the PM motor.

When the inductance of the stator changes depending on the energized phase, as illustrated in Fig. 11A, it has a cyclicality of 60°. Meanwhile, in the rotor inductance, the inductance of the d axis and the q axis is converted as illustrated in Fig. 11B by saliency. Here, it has a cyclicality of 180°. Further, as illustrated in Figs. 10A and 10B, the range of the change in inductance is smaller in the rotor than in the stator. In other words, there is a difference in the change in inductance between the stator and the rotor. In the method of the related art, the rotor position is estimated using saliency. In this case, it is necessary to extract only the change in the rotor inductance. However, if the range of change in the rotor inductance is small, the change is buried in the change in the stator inductance, thereby making it difficult to detect only the change in the rotor inductance.

That is, when harmonics are superposed on an arbitrary phase as in the method of the related art, the change in the inductance of the stator side makes it impossible to detect the change in the rotor inductance, thereby making it impossible to perform position estimation of the rotor.

Meanwhile, in the method according to the present embodiment, the harmonic superposition phase θdh is set at a given interval, that is, at a cycle of 60°, as illustrated in Fig. 7(a), so as to fix the value of the stator inductance. That is, the phase is fixed at the position plotted by a black circle (•) in Fig. 11A. In the example of Fig. 11A, the phase is fixed such that detection is performed at the position at which the inductance is the highest. As a result, it becomes possible to extract and detect only the change in the rotor inductance, and the accuracy of estimating the rotor position can be improved.

Even in the PM motor having large spatial harmonics such as concentrated windings in the stator, or the PM motor having non-saliency (that is, weak saliency) such as a surface magnet type rotor, it becomes possible to estimate the position of the rotor. In addition, in the case of a stator having a slotless structure, a magnetic flux density distribution may vary depending on the arrangement of the windings, resulting in slight spatial harmonics. In this case as well, the method according to the present embodiment can be applied to such a configuration.

In the example illustrated in Fig. 7(a), θdh is set to 0, 60, 120, and the like, but the present invention is not limited thereto. As described with reference to Fig. 11A, other angles may be used as long as the change in the stator inductance can be fixed. In the examples illustrated in Figs. 8A to 8F and 9A to 9F, position estimation of the rotor is performed using six patterns, but more patterns may be used to improve granularity and accuracy. An interval at which θdh is set may also be changed depending on the structure of the stator and rotor of the PM motor.

In addition, when a superposed voltage is applied to the PM motor, a current pattern illustrated in Fig. 10A (that is, a pattern with no vacant coils) or a current pattern illustrated in Fig. 10B (that is, a pattern with vacant coils) may also be used. In either case, it is sufficient that the change in inductance on the stator side is fixed, as illustrated in Fig. 11, and only the inductance on the rotor side can be extracted.

As described above, the present embodiment enables position sensorless driving of the PM motor having non-saliency (that is, weak saliency), which has been considered difficult to perform sensorless driving by harmonic superposition. In addition, even if the PM motor is operating in a low-speed range, the rotor position can be estimated.

### [Waveform]

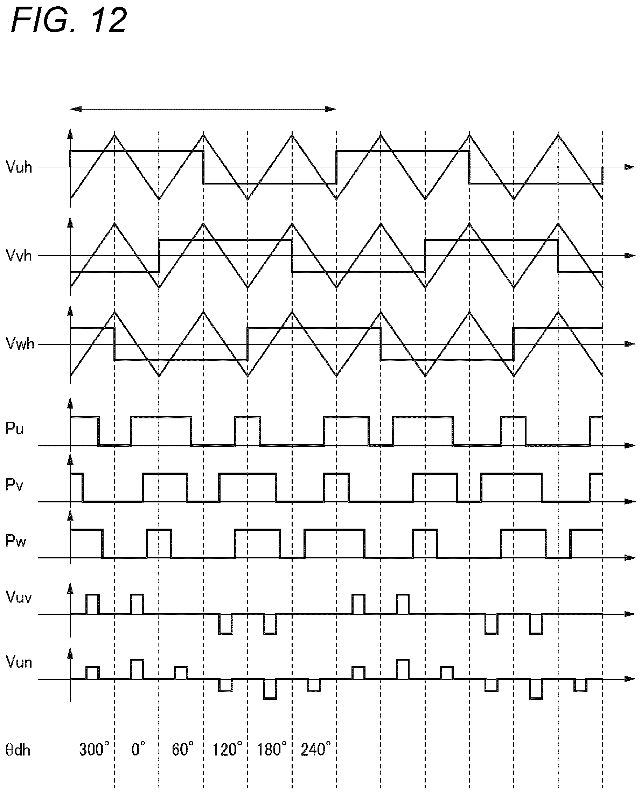

Examples of application patterns of harmonics used in estimating the rotor position according to the present invention are illustrated in Figs. 12 to 14. Here, an example of the PM motor having two phases and three poles will be described. It is noted that, if the number of phases or poles of the PM motor is different, the application pattern may be defined according to the configuration. The application patterns illustrated below illustrate an example in which all three stator coils V, U, and W are used, and no vacant coils are generated.

Fig. 12 is a diagram illustrating an example of a superposed waveform of harmonics according to the present embodiment. The waveform illustrated here is an example of a 180-degree rectangular wave. The horizontal axis in Fig. 12 indicates time, and corresponds to each graph. In Fig. 12, a dashed line corresponds to an interval of Ts, and six sections indicate one cycle of the waveform as illustrated in both directions in the drawing. In addition, in Fig. 12, the top three indicate harmonic voltage commands Vuh, Vvh, and Vwh for the stator coil U-phase, V-phase, and W-phase, respectively, and are illustrated here corresponding to a carrier wave by a triangular wave. In addition, Pu, Pv, and Pw indicate pulse signals from the PWM controller 10 corresponding to the harmonics for position estimation, which correspond to the U-phase, V-phase, and W-phase, respectively. Vuv indicates a line voltage in the three-phase circuit. Vun indicates a phase voltage of the U-phase.

The harmonic voltage commands Vuh, Vvh, and Vwh are shifted in phase by 120°. In other words, the magnitudes of the voltages of the respective phases are equal to each other, and provided is a configuration of a symmetrical three-phase AC voltage with a phase difference of 120°. The voltage commands Vuh, Vvh, and Vwh are configured to rise and fall at the positions of positive and negative peaks of a triangular carrier wave.

The harmonic pulse signal Pu for the stator coil U, the harmonic pulse signal Pv for the stator coil V, and the harmonic pulse signal Pw for the stator coil W indicate signal waveforms output from the PWM controller 10 to the inverter 2 when position estimation of the rotor is performed, and these pulse signals are specified such that the superposed voltage becomes constant when the position estimation is performed.

In the example of Fig. 12, six sections of one cycle correspond to θdh = 300°, 0°, 60°, 120°, 180°, and 240° from the right, which corresponds to Fig. 8F, 8A, 8B, 8C, 8D, and 8E.

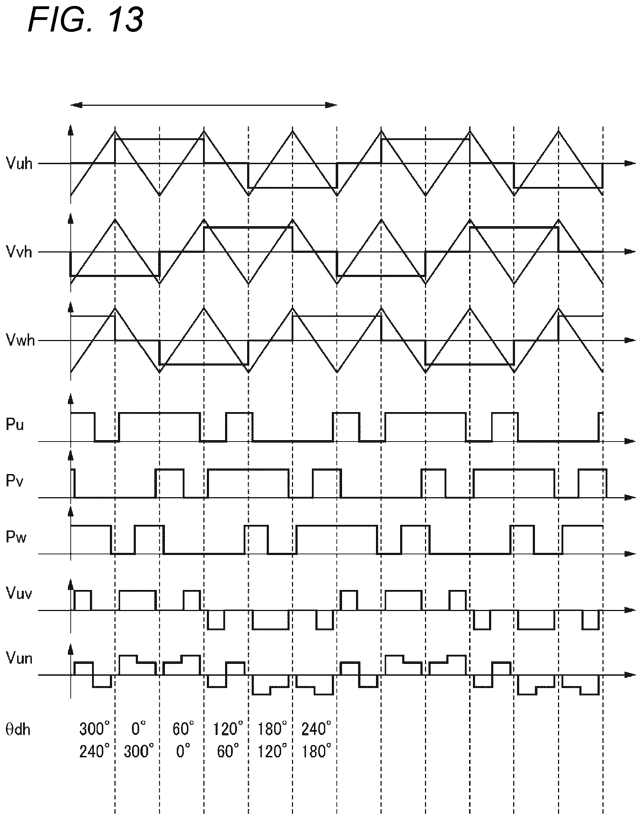

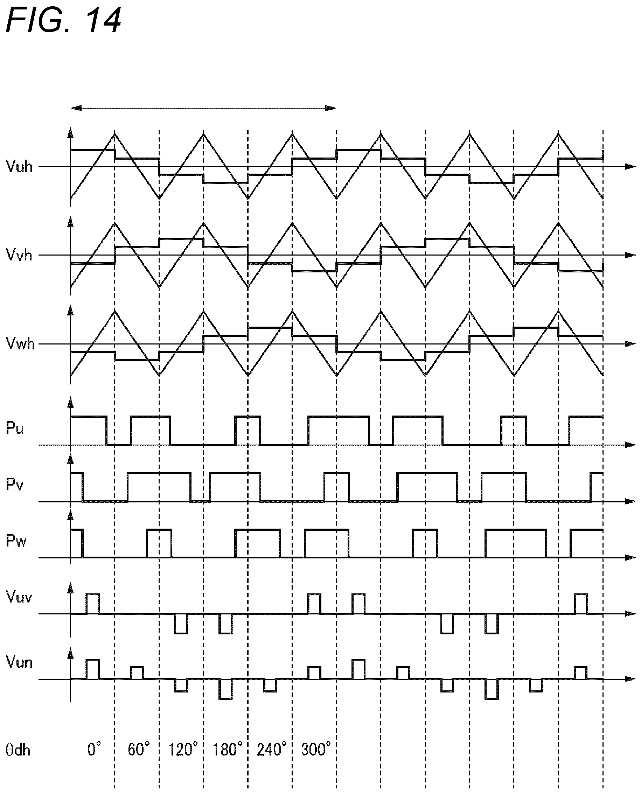

Figs. 13 and 14 are diagrams each illustrating other examples of superposed waveforms of harmonics according to the present embodiment. The waveform in Fig. 13 illustrates an example of a 120-degree rectangular wave. The waveform in Fig. 14 illustrates an example of a sine wave. The configuration in Figs. 13 and 14 also has a configuration in which the phases are symmetrical. The carrier wave in Figs. 13 and 14 also illustrates an example of a triangular wave, and the voltage commands Vuh, Vvh, and Vwh are configured to rise and fall at the positions of positive and negative peaks of the carrier wave of the triangular wave.

It is noted that, in the control device 4 according to the present embodiment, the position estimator 15 performs current detection (detection of current values lu and Iw), voltage update (update of voltage commands Vuh, Vvh, and Vwh), and Fourier integration processes for position estimation of the rotor. These processes for the position estimation may be performed with priority over the control of the rotation operation of the rotor, such as current control and speed control from the command generator 6. In other words, the signals related to the control for the position estimation may be executed by interrupting with priority.

As described above, the present embodiment makes it possible to implement position sensorless control capable of estimating position in a low-speed range in the PM motor, regardless of a structure related to saliency of the rotor.

### <Other Embodiments>

In the above-described embodiment, the PM motor having non-saliency has been described as an example. The application of the present invention is not limited to the motor configuration illustrated in the above-described embodiment. For example, the present invention can be applied to a slotless motor, a stepping motor, and the like. The present invention can also be applied to a PM motor having a concentrated winding/distributed winding coil configuration, a single-layer winding/multilayer winding coil configuration, a full-pitch winding/short-pitch winding coil configuration, and the like, as a configuration of a coil of a stator.

The device to which the present invention can be applied may be used for PM motor control of equipment that requires operation in a low-speed range or equipment adapted for size reduction. It is noted that the low-speed range here may be, for example, a range of speeds of 10% or less relative to the rated rotation speed of the motor.

In addition, the motor control method according to the present embodiment may be combined with another sensorless control method in one device. For example, in motor control, the method according to the present invention may be used in the low-speed range, and sensorless control of the related art may be used in the high-speed range.

In addition, in the present invention, a program or application for implementing the functions of one or more of the above-mentioned embodiments may be supplied to a system or device using a network or a storage medium, and one or more processors in the computer of the system or device may perform a process of reading and executing the program.

In addition, one or more functions may be implemented by a circuit (for example, an application specific integrated circuit (ASIC) or a field programmable gate array (FPGA)) that implements the functions.

As described above, the present invention is not limited to the above-described embodiment. Further, the present invention also contemplates combinations of various configurations of the embodiments, as well as modifications and applications by those skilled in the art based on the description in the specification and well-known techniques, and is within the scope of requesting protection.

As described above, the following items are disclosed in the present specification.
(1) A driving device (for example, 4) for a permanent magnet synchronous motor (for example, 1), the driving device including:
   an inverter (for example, 2) configured to drive the permanent magnet synchronous motor;
   a detection unit (for example, 3) configured to detect a current flowing toward the permanent magnet synchronous motor; and
   a control unit (for example, 4) configured to control, using a current value detected by the detection unit, the permanent magnet synchronous motor via the inverter,
   in which the control unit is configured to perform an estimation calculation of a position of a rotor of the permanent magnet synchronous motor based on a current generated by applying a second multiphase alternating current at a given phase interval to the permanent magnet synchronous motor, and
   the second multiphase alternating current has a higher frequency than a frequency of a first multiphase alternating current for rotation driving of the permanent magnet synchronous motor. According to this configuration, the device including the PM motor makes it possible to implement position sensorless control that is also capable of performing position estimation in a low-speed range, regardless of a structure related to saliency of the rotor.
(2) The driving device according to (1), in which the second multiphase alternating current has symmetrical phases.
   According to this configuration, it is possible to control application of a multiphase alternating current with higher accuracy.
(3) The driving device according to (1), in which the second multiphase alternating current is a waveform synchronized with a carrier wave used to perform a switching operation by the inverter.
   According to this configuration, it is possible to control application of a multiphase alternating current with higher accuracy.
(4) The driving device according to (1), in which:
   a multiphase alternating current output from the inverter is a three-phase alternating current, and
   the second multiphase alternating current is an integer multiple of one-third of a frequency of a carrier wave used to perform a switching operation in the inverter.
   According to this configuration, it is possible to implement position sensorless control that is also capable of performing position estimation in the low-speed range for a three-phase PM motor.
(5) The driving device according to (1), in which the second multiphase alternating current has a waveform pattern which is determined in advance based on a phase configuration of the permanent magnet synchronous motor.
   According to this configuration, it is possible to specify a pattern for position estimation of the rotor according to a phase configuration of the PM motor.
(6) The driving device according to (1), in which the second multiphase alternating current has a waveform pattern which is determined based on one of a 180° rectangular wave, a 120° rectangular wave, or a sine wave.
   According to this configuration, various waveforms can be specified as patterns for position estimation of the rotor.
(7) The driving device according to (1), in which the permanent magnet synchronous motor has a configuration including two poles and three phases, and
   the second multiphase alternating current is formed of a harmonic pattern every 60°.
   According to this configuration, it is possible to implement position sensorless control that is also capable of performing position estimation in the low-speed range for a PM motor having a configuration having two poles and three phases.
(8) The driving device according to (1), in which the control unit is configured to estimate the position of the rotor based on a phase of the current generated by applying the second multiphase alternating current to the permanent magnet synchronous motor at the given phase interval.
   According to this configuration, it is possible to estimate the position of the rotor by suppressing the influence of the stator side and extracting only a change on the rotor side.
(9) The driving device according to (1), in which the control unit is configured to execute:
   a first process of controlling the first multiphase alternating current for the rotation driving of the permanent magnet synchronous motor, and
   a second process of controlling the second multiphase alternating current for position estimation of the permanent magnet synchronous motor, and
   the second process is executed in a shorter cycle than a cycle of the first process and is executed with priority over the first process.
   According to this configuration, in the PM motor, it becomes possible to perform position estimation of the rotor in a short cycle with priority over rotation control.
(10) The driving device according to (9), in which the second process includes at least one of:
   an update process of updating a voltage command corresponding to the second multiphase alternating current;
   a detection process of detecting a current value applied to the permanent magnet synchronous motor in accordance with the second multiphase alternating current; and
   a calculation process of calculating the position of the rotor based on the current value obtained by the detection process.
   According to this configuration, in the PM motor, it is possible to perform, as control for the position estimation of the rotor, the updating of the voltage command, the detection of the current value, and the calculation of the rotor with priority in a short cycle.
(11) A control method for a permanent magnet synchronous motor (for example, 1) including an inverter (for example, 2) configured to drive the permanent magnet synchronous motor and a detection unit (for example, 3) configured to detect a current flowing through the permanent magnet synchronous motor, the control method comprising controlling the permanent magnet synchronous motor via the inverter using a current value detected by the detection unit, and
   wherein an estimation calculation of a position of a rotor of the permanent magnet synchronous motor is performed, in the control step, based on the current generated by applying a second multiphase alternating current at a given phase interval to the permanent magnet synchronous motor, and
   the second multiphase alternating current having a higher frequency than a frequency of a first multiphase alternating current for rotation driving of the permanent magnet synchronous motor.
   According to this configuration, the device including the PM motor makes it possible to implement position sensorless control that is also capable of performing position estimation in a low-speed range, regardless of a structure related to saliency of the rotor.

Although various embodiments have been described above with reference to the drawings, it goes without saying that the present invention is not limited to the embodiments. A person skilled in the art can clearly conceive of various modifications or corrections within the scope of the claims, and it is understood that these modifications or corrections naturally fall within the technical scope of the present invention. In addition, the components in the above-described embodiments may be arbitrarily combined with each other within the scope of the invention.

Although various embodiments have been described above, it goes without saying that the present invention is not limited to such embodiments. A person skilled in the art can clearly conceive of various modifications or corrections within the scope of the claims, and it is understood that these modifications or corrections naturally fall within the technical scope of the present invention. In addition, the components in the above-described embodiments may be arbitrarily combined with each other within the scope of the invention.

It is noted that the present application is based on the Japanese patent application (patent application No. 2022-125982) filed on August 8, 2022, the contents of which are incorporated by reference into the present application.

### REFERENCE SIGNS LIST

- 1: PM motor
- 2: inverter
- 3: detector
- 4: control device
- 5: mechanical load
- 6: command generator
- 7a, 7b: current controllers
- 8a, 8b: inverse coordinate converter
- 9a, 9b: coordinate converter
- 10: PWM controller
- 11a - 11f: adder/subtractor
- 12: KPLL controller
- 13: integrator
- 14: double gain
- 15: position estimator
- 16: harmonic phase generator
- 17: harmonic voltage setter
- 18: zero setter
- 19: sine signal generator
- 20: cosine signal generator
- 21a, 21b: integrator
- 22a, 22b: average value calculator
- 23: arctangent calculator
- 95: voltage setter
- 96: change amount extractor
- 97: axis error estimator
- 98: zero setter
- 100: PM motor
- 101: rotor
- 102: stator

## Claims

1. A driving device for a permanent magnet synchronous motor, the driving device comprising:
an inverter configured to drive the permanent magnet synchronous motor;
a detection unit configured to detect a current flowing toward the permanent magnet synchronous motor; and
a control unit configured to control, using a current value detected by the detection unit, the permanent magnet synchronous motor via the inverter,
wherein the control unit is configured to perform an estimation calculation of a position of a rotor of the permanent magnet synchronous motor based on a current generated by applying a second multiphase alternating current at a given phase interval to the permanent magnet synchronous motor, and
the second multiphase alternating current has a higher frequency than a frequency of a first multiphase alternating current for rotation driving of the permanent magnet synchronous motor.

2. The driving device according to claim 1, wherein the second multiphase alternating current has symmetrical phases.

3. The driving device according to claim 1, wherein the second multiphase alternating current is a waveform synchronized with a carrier wave used to perform a switching operation in the inverter.

4. The driving device according to claim 1, wherein:
a multiphase alternating current output from the inverter is a three-phase alternating current, and
the second multiphase alternating current is an integer multiple of one-third of a frequency of a carrier wave used to perform a switching operation in the inverter.

5. The driving device according to claim 1, wherein the second multiphase alternating current has a waveform pattern which is determined in advance based on a phase configuration of the permanent magnet synchronous motor.

6. The driving device according to claim 1, wherein the second multiphase alternating current has a waveform pattern which is determined based on one of a 180° rectangular wave, a 120° rectangular wave, or a sine wave.

7. The driving device according to claim 1, wherein the permanent magnet synchronous motor has a configuration including two poles and three phases, and
the second multiphase alternating current is formed of a harmonic pattern every 60°.

8. The driving device according to claim 1, wherein the control unit is configured to estimate the position of the rotor based on a phase of the current generated by applying the second multiphase alternating current to the permanent magnet synchronous motor at the given phase interval.

9. The driving device according to claim 1, wherein the control unit is configured to execute:
a first process of controlling the first multiphase alternating current for the rotation driving of the permanent magnet synchronous motor; and
a second process of controlling the second multiphase alternating current for position estimation of the permanent magnet synchronous motor, and
the second process is executed in a shorter cycle than a cycle of the first process and is executed with priority over the first process.

10. The driving device according to claim 9, wherein the second process includes at least one of:
an update process of updating a voltage command corresponding to the second multiphase alternating current;
a detection process of detecting a current value applied to the permanent magnet synchronous motor in accordance with the second multiphase alternating current; and
a calculation process of calculating the position of the rotor based on the current value obtained by the detection process.

11. A control method for a permanent magnet synchronous motor including an inverter configured to drive the permanent magnet synchronous motor and a detection unit configured to detect a current flowing through the permanent magnet synchronous motor, the control method comprising controlling the permanent magnet synchronous motor via the inverter using a current value detected by the detection unit, and
wherein an estimation calculation of a position of a rotor of the permanent magnet synchronous motor is performed, in the controlling, based on a current which is generated by applying a second multiphase alternating current at a given phase interval to the permanent magnet synchronous motor, and
the second multiphase alternating current has a higher frequency than a frequency of a first multiphase alternating current for rotation driving of the permanent magnet synchronous motor.
